(19) Europäisches Patentamt
European Patent Office
Office européen des brevets

(11) Veröffentlichungsnummer: **0 267 459**
**B1**

(12) **EUROPÄISCHE PATENTSCHRIFT**

(45) Veröffentlichungstag der Patentschrift: **30.01.91**

(51) Int. Cl.$^5$: **C 08 F 220/22,** B 29 D 11/00

(21) Anmeldenummer: **87115303.7**

(22) Anmeldetag: **20.10.87**

(54) **Transparentes Polymermaterial.**

(30) Priorität: **25.10.86 DE 3636401**

(43) Veröffentlichungstag der Anmeldung:
**18.05.88 Patentblatt 88/20**

(45) Bekanntmachung des Hinweises auf die Patenterteilung:
**30.01.91 Patentblatt 91/05**

(84) Benannte Vertragsstaaten:
**BE DE FR GB IT**

(56) Entgegenhaltungen:
**GB-A-2 089 523**

**CHEMICAL PATENTS INDEX, BASIC ABSTRACTS JOURNAL, Sektion A, Woche 8631, 24-09-1986, A0337, Nr. 86-199899/31, Derwent Publications Ltd, London, GB; JP-A-61130901**

**DATABASE CHEMICAL ABSTRACTS, 8. Februar 1984, Zusammenfassung Nr. 104(20):169692d; & JP-A-60166307**

(73) Patentinhaber: **HOECHST AKTIENGESELLSCHAFT**
**Postfach 80 03 20**
**D-6230 Frankfurt am Main 80 (DE)**

(72) Erfinder: **Wieners, Gerhard, Dr.**
**Unterweg 7**
**D-6000 Frankfurt am Main (DE)**
Erfinder: **Heumüller, Rudolf, Dr.**
**Sodener Weg 1**
**D-6232 Bad Soden am Taunus (DE)**
Erfinder: **Coutandin, Jochen, Dr.**
**Friedenstrasse 3**
**D-6551 Bretzenheim (DE)**
Erfinder: **Groh, Werner, Dr.**
**Geisenheimer Strasse 93**
**D-6000 Frankfurt am Main 71 (DE)**
Erfinder: **Herbrechtsmeier, Peter, Dr.**
**Friedrich-Stolze-Strasse 10**
**D-6240 Königstein/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 267 459 B1

Courier Press, Leamington Spa, England.

(56) Entgegenhaltungen:
CHEMICAL ABSTRACTS SERVICE REGISTRY HANDBOOK, Nummer Sektion, 1986, Zusatz, Teil 1, Seite 1515RO

CHEMICAL PATENTS INDEX, BASIC ABSTRACTS JOURNAL, Sektion A, Woche 8742, 16-12-1987, A0643, Nr. 87-295938/42, Derwent Publication Ltd, London, GB; & JP-A-62 208 005

**Beschreibung**

Die Erfindung bezieht sich auf ein amorphes halogenhaltiges Polymer, welches sich für die Herstellung von Polymer-Gläsern und optischen Artikeln wie Linsen und Lichtwellenleitern für die Übermittlung von Lichtsignalen eignet. Diese Artikel besitzen eine hohe Wärmestandfestigkeit.

Lichtwellenleiter können aus einem Kern und einem Mantel bestehen, wobei das Kernmaterial immer einen höheren Brechungsindex hat als das Mantelmaterial. Kernmaterial und Mantelmaterial eines derartigen Lichtwellenleiters sollen so wenig Licht wie möglich absorbieren.

Die bisher für Lichtwellenleiter am häufigsten eingesetzten polymeren Materialien sind Homo- und Copolymere des Methylmethacrylats. Während für den Kern auch halogenhaltige Polymere eingesetzt wurden, wurden für den Mantel bislang ausschließlich fluorhaltige Polymere verwendet, weil sie einen niedrigeren Brechungsindex aufweisen. Zur Verminderung der Lichtabsorption ist auch schon vorgeschlagen worden, die Wasserstoffatome in den Monomeren und Polymeren durch Deuterium zu ersetzen.

Bekannt sind Copolymere von Methylmethacrylat mit einer Verbindung der Formel $CH_2{=}CR{-}(CO{-}O)_n{-}ArBr_m$ (R = H, $CH_3$; n = Null, 1, m = 1 bis 5) (vgl. DE—A 2 202 791). Namentlich genannt sind Acrylsäureester und Methacrylsäureester von Mono-, Di-, Tri-, Tetra- und Pentabromphenol. Der Anteil des bromhaltigen Comonomeren beträgt maximal 44 Prozent.

Weiterhin sind bekannt Copolymere aus Trifluormethacrylsäureester und Styrol oder substituierten Styrolen, beispielsweise halogenhaltigem Styrol (vgl. DE—OS 3 518 617). Die Copolymeren werden u.a. als Mantelmaterial für optische Fasern verwendet.

Schließlich ist auch ein Lichtwellenleiter beschrieben worden, dessen Kernmaterial durch Blockpolymerisation von u.a. halogeniertem Arylmethacrylat, beispielsweise Pentafluorphenyl-methacrylat hergestellt wird (vgl. JP—OS 60—242 404). Als Mantelmaterial werden Copolymere von Vinylidenfluorid, Tetrafluorethylen und Hexafluorpropylen eingesetzt.

Die vorgenannten Polymeren ergeben jedoch für bestimmte Einsatzgebiete keine Lichtwellenleiter mit ausreichender Wärmestandfestigkeit.

Homo- und Copolymere von Pentachlorphenylacrylaten sind z.B. aus der GB—A 826,831 bekannt, jedoch ist nichts von den optischen Eigenschaften dieser Polymere erwähnt.

Polymere, welche Einheiten enthalten die sich von Chlorphenylestern und 2-Fluoracrylsäure ableiten werden in der nicht ververöffentlichten prioritätsgleichen EP—A—267 460 beschrieben.

Es wurde nun gefunden, daß man ein transparentes Material mit sehr guter Wärmestandfestigkeit und guter Lichtleitfähigkeit erhält, wenn es im wesentlichen aus einem Polymer besteht, welches sich vorwiegend von Bromphenylfluoracrylaten ableitet.

Die Erfindung betrifft somit ein transparentes Material, das im wesentlichen aus einem amorphen, halogenhaltigen Polymer besteht, dadurch gekennzeichnet, daß das Polymer zu mindestens 50 Gewichtsprozent aus Einheiten besteht, die sich von einem Ester der Formel (I) ableiten,

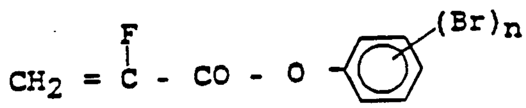 (I)

in der n eine ganze Zahl von 1 bis 5 bedeutet.

Die Erfindung betrifft weiterhin ein Verfahren zu seiner Herstellung.

In der Formel (I) ist n ist vorzugsweise 3, 4 oder 5, insbesondere 5. Beispiele für erfindungsgemäß einzusetzende Verbindungen der Formel (I) sind:

Bromphenyl-fluoracrylat, Tribromphenyl-fluoracrylat, Tetrabromphenyl-fluoracrylat, Pentabromphenyl-fluoracrylat.

Bevorzugt eingesetzt von diesen Monomeren wird, Pentabromphenyl-fluoracrylat.

Die Monomeren können in bekannter Weise durch Umsetzung von α-Fluoracryloylhalogenid mit einem (Poly) Bromphenol hergestellt werden.

Weiterhin sind in den erfindungsgemäßen Polymeren Einheiten enthalten, welche sich beispielsweise von den folgenden Monomeren ableiten:

Alkylacrylate, Alkylmethacrylate, Styrol, α-Methylstyrol, Vinylchlorid und andere halogenhaltige Monomere, Maleinsäureanhydrid, Acrylsäure, Acrylnitril.

Bevorzugt sind Methylmethacrylat, Styrol, Hexafluorisopropylmethacrylat, Acrylnitril und Acrylsäure.

Die aus den genannten Monomeren durch radikalische Blockpolymerisation hergestellten Polymeren bestehen zu mindestens 50 Gew.-%, vorzugsweise 60 bis 100 Gew.-%, aus Einheiten, welche sich von Verbindungen der Formel (I) ableiten. 0 bis 50 Gew.-%, vorzugsweise 0 bis 40 Gew.-%, der Einheiten leiten sich von den Monomeren der zweiten Gruppe ab.

Die erfindungsgemäßen Polymeren und Copolymeren weisen eine Glasübergangstemperatur von 120° bis 260°C, vorzugsweise 150° bis 240°C, insbesondere 165° bis 240°C auf. Die Polymeren sind transparent und thermoplastisch verarbeitbar und bilden das Material für die Herstellung von Lichtwellenleitern, welche auch aus Kern und Mantel bestehen können. Dabei kann das Polymere für den

Mantel der Lichtwellenleiter aus den gleichen Monomeren aufgebaut sein wie das Polymere für den Kern. Der Halogengehalt im Mantelpolymeren muß jedoch so niedrig sein, daß der Brechungsindex des Mantelpolymeren kleiner ist als derjenige des Kernpolymeren.

Die Herstellung von Lichtwellenleitern aus dem erfindungsgemäßen transparenten Material kann nach an sich bekannten Verfahren erfolgen:

1. Extrusion eines mantellosen Lichtwellenleiters mit Hilfe eines Extruders.

2. Coextrusion einer Kern- und Mantelkomponente mit Hilfe eines Extruders und einer Bikomponenten-Spinndüse.

3. Extrusion eines Kerns und anschließende Extrusionsbeschichtung mit einem Mantelpolymeren.

4. Extrusion eines Kerns und anschließende Aufbringung eines Mantelpolymeren in einem Lösungsmittel.

5. Extrusion eines Kerns und anschließende Aufbringung eines Mantelpolymeren in Form einer Dispersion, Trocknen und Sintern der Dispersion bzw. des Dispersionsfilms.

Die aus dem erfindungsgemäßen transparenten Material hergestellten Lichtwellenleiter zeichnen sich durch eine sehr gute Wärmestandfestigkeit aus und können deswegen an Orten mit hoher Wärmebelastung, z.B. in Automobilen, eingesetzt werden.

Beispiel 1

Copolymer aus Methylmethacrylat (MMA) und α-Fluoracrylsäurepentabromphenylester (FA—PBP)

Zur Vorbereitung der Monomeren wurde FA—PBP in Toluol in der Siedehitze in Stickstoffatmosphäre gelöst und langsam, zuletzt unter Eiskühlung auskristallisiert, abfiltriert und getrocknet.

In einem Rührautoklaven mit kräftigem Rührer und einem sich nach unten verjüngenden, mit Polytetrafluorethylen ausgekleideten Reaktionsraum wurden in 40 Gewichtsteile MMA, versetzt mit 0,025 Teilen tert. Butylperbenzoat und 0,5 Teilen Dodecylmercapten, 30 min lang ein kräftiger Strom von Stickstoff eingeleitet. Die Mischung wurde mit 60 Teilen FA—PBP versetzt und in dem zu einem Drittel gefüllten, verschlossenen Autoklaven eine Stunde lang geknetet, gleichzeitig auf 115°C erhitzt. Während dieser Zeit fiel die Viskosität der Mischung, abzulesen an der Leistungsaufnahme des Rührers, zunächst ab. Im Verlauf einer weiteren Stunde stieg sie wieder an. Der Rührer wurde nach diesen 2 Stunden aus der Reaktionsmischung nach oben herausgezogen; die Temperatur wurde weitere 5 h auf 115°C gehalten, danach für weitere 2 h auf 150°C erhöht. Der Autoklav wurde hiernach abgekühlt und der glasig erstarrte klare Polymerkörper entnommen.

Mit Hilfe der DSC-Methode wurde der Glaspunkt des Produkts zu $T_g = 155°C$ bestimmt; das Gewichtsmittel des Polymerisationsgrades ergab sich anhand eines Vergleichs mit Polystyrolstandards in der GPC zu $P_w = 1000$.

Das Material ließ sich in einem Formwerkzeug bei 250°C unter Druck zu Linsen und ähnlichen optischen Gegenständen umformen. Nach Polieren der Oberfläche einer Linse wurde eine Transmission von 83% des eingestrahlten Lichts erreicht.

Transmission und Abbildungseigenschaften dieser Linse blieben auch nach 24-stündiger Lagerung bei 100°C und einer Luftfeuchtigkeit von 100 mbar unverändert.

Vergleichsbeispiel A

Eine unter entsprechenden Bedingungen aus einem Polymerglaskörper aus Polymethylmethacrylat (PMMA) geformte Linse zeigte nach dem Polieren eine Transmission von 87% und vergleichbar gute Abbildungseigenschaften. Bereits nach 2-stündiger Lagerung bei 120°C war die Oberfläche der Linse deutlich getrübt und die Form der Linse hatte sich so weitgehend verändert, daß keine brauchbare Abbildung mehr zustande kam.

Beispiel 2

Copolymer aus MMA und FA—PBP

Ein Copolymer, das wie in Beispiel 1 beschrieben, jedoch unter Zugabe von 1,5 anstatt 0,5 Teilen Dodecylmerkaptan hergestellt worden war, wies ein Gewichtsmittelwert des Polymerisationsgrades von $P_w = 400$ auf. Dieses Material ließ sich erheblich einfacher zu Gegenständen etwas geringerer optischer Güte wie Sichtfenster und Abdeckungen von Armaturen verarbeiten. Nach 24-stündiger Lagerung bei 100°C und 100 mbar Luftfeuchtigkeit verminderte sich die Lichtdurchlässigkeit eines Probekörpers von 80 auf 78%.

Vergleichsbeispiel B

Lichtwellenleiter aus Polymethylmethacrylat (PMMA)

Ein drei Meter langes Stück eines Lichtwellenleiters aus PMMA zeigte zu Beginn des Experiments eine Lichtdurchlässigkeit von 70%. Bereits nach dreistündiger Lagerung bei 110°C war die Länge der Faser auf die Hälfte geschrumpft und die Lichtdurchlässigkeit auf 10% der eingestrahlten Lichtintensität gesunken.

**Patentansprüche**

1. Amorphes, halogenhaltiges Polymer mit einer Glasübergangstemperatur von 120° bis 260°C,

bestehend zu mindestens 50 Gewichtsprozent aus Einheiten, die sich von einem Ester der Formel (I) ableiten,

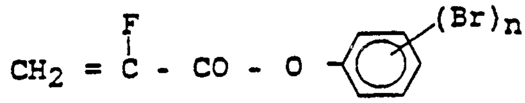 (I)

in der n eine ganze Zahl von 1 bis 5 bedeutet.

2. Polymer nach Anspruch 1, dadurch gekennzeichnet, daß der Ester der Formel (I) Pentabromphenyl-α-fluoracrylat ist.

3. Polymer nach Anspruch 1, dadurch gekennzeichnet, daß es zu 0 bis 50 Gew.-% aus Einheiten besteht, die sich von Alkylacrylaten, Alkylmethacrylaten, Styrol, α-Methylstyrol, Vinylchlorid und anderen halogenhaltigen Monomeren, Maleinsäureanhydrid, Acrylsäure oder Acrylnitril ableiten.

4. Verfahren zur Herstellung eines amorphen, halogenhaltigen Polymers durch radikalische Blockpolymerisation eines Acrylsäureesters von einem bromierten Phenol, dadurch gekennzeichnet, daß mindestens 50 Gew.-%, bezogen auf das fertige Polymer, eines Esters der Formel (I)

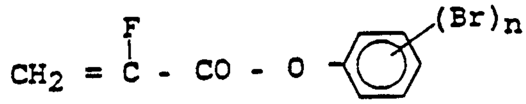 (I)

in der n eine ganze Zahl von 1 bis 5 bedeutet, polymerisiert werden.

5. Verwendung des Polymers gemäß Anspruch 1 zur Herstellung von lichtübertragenden Fasern.

6. Verwendung des Polymers gemäß Anspruch 2 zur Herstellung von lichtübertragenden Fasern.

**Revendications**

1. Polymère halogéné amorphe présentant une température de transition vitreuse de 120 à 260°C, polymère qui est constitué, pour au moins 50% en poids, de motifs dérivant d'un ester répondant à la formule I:

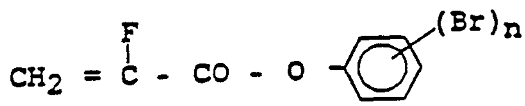 (I)

dans laquelle n désigne un nombre entier de 1 à 5.

2. Polymère selon la revendication 1 caractérisé en ce que l'ester de formule I est l'α-fluoracrylate de pentabromophényle.

3. Polymère selon la revendication 1 caractérisé en ce qu'il est constitué, pour 0 à 50% en poids, de motifs dérivant d'acrylates d'alkyles, de méthacrylates d'alkyles, du styrène, de l'α-méthyl-styrène, du chlorure de vinyle ou d'autres monomères halogénés, de l'anhydride maléique, de l'acide acrylique ou de l'acrylonitrile.

4. Procédé pour préparer un polymère halogéné amorphe par polymérisation séquencée radicalaire d'un ester acrylique d'un phénol bromé, procédé caractérisé en ce qu'on polymérise au moins 50% en poids, par rapport au polymère fini, d'un ester répondant à la formule I:

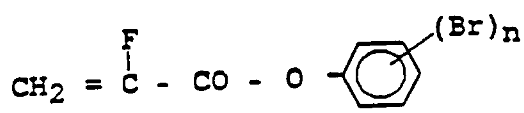 (I)

dans laquelle n désigne un nombre entier de 1 à 5.

5. Application du polymère selon la revendication 1 à la fabrication de fibres optiques.

6. Application du polymère selon la revendication 2 à la fabrication de fibres optiques.

**Claims**

1. An amorphous halogen-containing polymer having a glass transition point of 120° to 260°C, composed to the extent of at least 50 percent by weight of units derived from an ester of the formula (I)

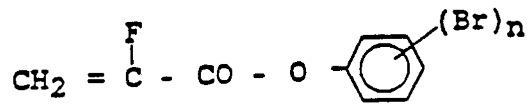 (I)

in which n is an integer from 1 to 5.

2. A polymer as claimed in claim 1, wherein the ester of the formula (I) is pentabromophenyl α-fluoroacrylate.

3. A polymer as claimed in claim 1, which is composed to the extent of 0 to 50% by weight of units derived from alkyl acrylates, alkyl methacrylates, styrene, α-methylstyrene, vinyl chloride and other halogen-containing monomers, maleic anhydride, acrylic acid or acrylonitrile.

4. A process for preparing an amorphous halogen-containing polymer by free-radical block polymerization of an acrylate of a brominated phenol, which comprises polymerizing at least 50% by weight, relative to the finished polymer, of an ester of the formula (I)

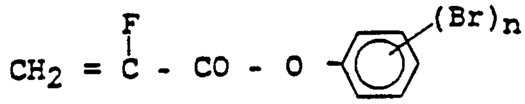

(I)

in which n is an integer from 1 to 5.

5. The use of the polymer as claimed in claim 1 for the preparation of light-transmitting fibers.

6. The use of the polymer as claimed in claim 2 for the preparation of light-transmitting fibers.